# EUROPÄISCHE PATENTSCHRIFT

(11) **EP 3 992 090 B1**
(45) Veröffentlichungstag und Bekanntmachung des Hinweises auf die Patenterteilung: **31.05.2023**
(21) Anmeldenummer: 20204037.4
(22) Anmeldetag: 27.10.2020
(51) Int. Cl.: B64F 1/36, B65G 7/08, B65G 47/248, B65G 47/53, B65G 15/44

(54) **GEPÄCKFÖRDERSYSTEM UND VERFAHREN ZUM BEFÜLLEN EINES GEPÄCKKARUSSELL EINES GEPÄCKFÖRDERSYSTEMS MIT GEPÄCKSTÜCKEN**
BAGGAGE CONVEYOR SYSTEM AND METHOD FOR FILLING A LUGGAGE CAROUSEL OF A BAGGAGE CONVEYOR SYSTEM WITH BAGGAGE ITEMS
SYSTÈME DE TRANSPORT DE BAGAGES ET PROCÉDÉ DE REMPLISSAGE D'UN CARROUSEL À BAGAGES D'UN SYSTÈME DE TRANSPORT DE BAGAGES COMPORTANT DES BAGAGES

(43) Veröffentlichungstag der Anmeldung: 04.05.2022
(73) Patentinhaber: Siemens Logistics GmbH, 90429 Nürnberg (DE)
(72) Erfinder: KLOSSEK, Andreas, 90547 Stein-Deutenbach (DE); MUECK, Bengt, 32760 Detmold (DE)
(74) Vertreter: Siemens Patent Attorneys

(56) Entgegenhaltungen:
- EP-A1- 3 235 764
- EP-A1- 3 305 691
- EP-A2- 0 456 297
- EP-B1- 0 456 297
- WO-A1-2008/082300
- DE-A1- 2 155 120
- US-B1- 8 596 947

## Beschreibung

Die vorliegende Erfindung bezieht sich auf ein Gepäckfördersystem und ein Verfahren zum Befüllen eines Gepäckkarussell eines Gepäckfördersystems mit Gepäckstücken gemäß den unabhängigen Patentansprüchen.

Die EP 3 235 764 A1 zeigt ein Fördersystem für Gepäckstücke und ein entsprechendes Verfahren.

Fluggepäckstücke werden Passagieren und Baggagehandlern über Gepäckkarusselle (Baggage Carousels) ausgegeben. Ein Gepäcckarussell wird automatisiert an einer oder mehreren Beladestellen beladen. Das Gepäckstück wird auf dem Gepäckkarussell bis zu seiner Entnahme gespeichert und rotiert. Wird das Gepäckstück nicht sofort entnommen, kommt es erneut an der Beladestelle vorbei, so dass kein weiteres Gepäckstück auf das Gepäckkarussell geladen werden kann. Ob das Gepäckkarussell im Beladebereich Platz für eine Beladung hat, wird mit einfachen Detektoren, beispielsweise einfachen Lichtschranken, bestimmt. Eine Beladung wird nur zugelassen, wenn der Beladebereich eine Leerstelle mit vordefinierten Abmessungen aufweist.

Die Fläche des Gepäckkarussells ist begrenzt. Kommen die Passagiere später als ihre Gepäckstücke zum Gepäckkarussell, kann das Beladen des Gepäckkarussells dauerhaft blockiert werden. Weitere Gepäckstücke können nicht auf das Gepäckkarussell geladen werden. Dies kann zu Verzögerungen der Ausladung von Flugzeugen führen, die Passagiere müssen unnötig lang auf ihr Gepäck warten. Bei großen Flügen können wartende Passagiere, deren Gepäck sich im Rückstau befindet, den Zugang zum Gepäckkarussell blockieren.

Diese Probleme werden durch mehrere Maßnahmen abgeschwächt. Schräge Gepäckkarusselle können mit einer zweiten Reihe Gepäck beladen werden. Allerdings werden bei einer zweireihigen Beladung die Gepäckbänder stark belastet, zudem ist die Entnahme schwierig und für kleinere Menschen teilweise ohne Hilfe nicht zu schaffen. Ist die zweite Reihe schon besetzt, müssen weitere Gepäckstücke an der Beladestelle warten mit den bereits diskutierten Folgen. Die Gepäckstücke großer Flüge werden auf mehrere Gepäckkarusselle aufgeteilt (getrennt Priority/Business/First Class). Die schräge Fläche wird vergrößert für eine dritte Reihe Gepäckstücke. Dies erhöht zwar die Kapazität des Gepäckkarussells als Speicher, allerdings sind die Gepäckstücke der dritten Reihe kaum noch oder sehr schwer entnehmbar. Weiter werden längere und mehr Gepäckkarusselle gebaut oder das Problem wird einfach akzeptiert.

Der vorliegenden Erfindung liegt daher die Aufgabe zugrunde, eine verbesserte Lösung bereitzustellen. Diese Aufgabe wird durch die in den unabhängigen Ansprüchen beschriebenen Lösungen gelöst. Vorteilhafte Ausgestaltungen der Erfindung ergeben sich aus den Unteransprüchen.

Hinsichtlich eines Verfahrens wird die vorstehend genannte Aufgabe gelöst durch ein Verfahren zum Befüllen eines Gepäcckarussell eines Gepäckfördersystems mit Gepäckstücken. Das Verfahren umfasst die Verfahrensschritte:
a) Transportieren eines in einer Transportlage auf einer ersten Förderstrecke des Gepäckfördersystems aufliegenden Gepäckstücks, wobei die Transportlage eine flache, stabile Lage des Gepäckstücks ist.
b) Lageveränderung des Gepäckstücks umfassend ein Aufrichten des Gepäckstücks aus der Transportlage in eine aufgerichtete Lage, wobei das Gepäckstück in der aufgerichteten Lage auf dem Gepäckfördersystem weniger Auflagefläche als in der Transportlage einnimmt.
c) Einbringen des Gepäckstücks auf eine Leerstelle des Gepäckkarussells.
d) Bewegen des Gepäckstücks in aufgerichteter Lage auf der ehemaligen, nun befüllten Leerstelle mit dem Gepäckkarussell.

Um einen zuverlässigen Transport zu gewährleisten, werden Gepäckstücke in Flughafen-Gepäckfördersystemen stets in der Transportlage befördert. Dies ist insbesondere bei geneigten Förderstrecken, starken Beschleunigungen und Übergängen zwischen Förderstreckenabschnitten unverzichtbar. Unter der Transportlage wird ein Aufliegen der breitesten Seite des Gepäckstücks auf der Förderstrecke bezeichnet, so dass das Gepäckstück flach und tendenziell stabil auf der Förderstrecke aufliegt. Andere Positionen sind tendenziell instabiler, auf der schmalen Seite weisen Koffer häufig Rollen auf. Um zu erreichen, dass sich alle Gepäckstücke in Transportlage befinden, werden in Flughafen-Gepäckfördersystemen Kofferumwerfer herangezogen. Bei einem Transport in Transportlage weisen die Gepäckstücke jedoch eine was die Platzausnutzung betrifft sehr ungünstige Lage auf. Unter der Lage des Gepäckstücks soll sowohl die Position des Gepäckstücks auf dem Gepäckfördersystem, als auch als dreidimensionale Lage die Ausrichtung des Gepäckstücks im Raum verstanden werden.

Durch das Aufrichten vor dem Befüllen des Gepäckkarussells nehmen die Gepäckstücke auf dem Gepäckkarussell weniger Platz ein, was eine höhere Kapazität bedeutet. So kann das Gepäcckarussell platzoptimiert befüllt werden.

Das Verfahren ist auch anwendbar, wenn sich das Gepäckstück vor dem Befüllen in einer Transportwanne befand, also in der Transportwanne auf der ersten Förderstrecke transportiert wurde.

Das Aufrichten umfasst eine Rotation des Gepäckstücks um mindestens eine horizontale Achse. Das Aufrichten kann sequentiell oder gleichzeitig mit weiteren Lageveränderungen des Gepäckstücks durchgeführt werden.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Um die Platzausnutzung noch weiter zu optimieren, kann die Lageveränderung des Gepäckstücks umfassen Drehen des Gepäckstücks um eine vertikale Achse, so dass vor dem Einbringen des Gepäckstücks auf die Leerstelle eine kürzeste Seite der Auflagefläche des Gepäckstücks in der aufgerichteten Lage entlang der Leerstelle des Gepäckkarussells ausgerichtet ist. Diese Lageveränderung kann gleichzeitig mit dem Aufrichten, vorher oder nachher durchgeführt werden.

Wenn das Gepäckstück mit seiner kürzesten Seite/Kante entlang der Karussell-Laufrichtung angeordnet ist, weist das Gepäcckarussell bei gleicher Lauflänge eine noch höhere Kapazität auf.

Gemäß einer Ausführungsform kann ein Detektieren von Abmessungen und/oder Form und/oder Lage des Gepäckstücks in der Transportlage und/oder der aufgerichteten Lage erfolgen, wobei die Lageveränderung des Gepäckstücks basierend auf den detektierten Abmessungen und/oder der detektierten Form und/oder Lage durchgeführt wird. Die Lagebestimmung ist vorzugsweise dreidimensional.

Um die Raumausnutzung weiter zu optimieren und somit die Kapazität noch mehr zu erhöhen, kann die Leerstelle für das Gepäckstück ausgewählt werden basierend auf der Auflagefläche des Gepäckstücks in der aufgerichteten Lage. Beim Stand der Technik wird eine Leerstelle gesucht für die größtmöglichen erlaubten Gepäckstückabmessungen des Gepäckfördersystems. Die erfindungsgemäße Lösung erlaubt eine verbesserte Befüllung. Es muss für jedes Gepäckstück nur eine Leerstelle ausreichender Größe gefunden werden. Größere Leerstellen können mit einem oder auch mit mehreren kleineren Gepäckstücken befüllt werden.

Gemäß einer Ausführungsform kann das Gepäckkarussell frei wählbare oder vordefinierte Leerstellen mit gleichen und/oder unterschiedlichen Abmessungen aufweisen, wobei die vordefinierten Leerstellen entlang einer Transportrichtung des Gepäckkarussells hintereinander angeordnet sind und einander nachfolgende vordefinierte Leerstellen als Abtrennung Unterstützungselemente zum Abstützen der Gepäckstücke in aufgerichteter Lage aufweisen. Da die Karussell-Laufrichtung im Wesentlichen quer zu den Abtrennungen angeordnet ist, ist auch ein Stehen eines Koffers auf seinen Rädern unproblematisch, insbesondere wenn die Karussell-Auflagefläche noch leicht geneigt ausgestaltet ist. Die Unterstützungselemente können fest oder variabel positioniert werden und die Abmessungen der Leerstellen, insbesondere begrenzt durch die Abstände der Unterstützungselemente, bestimmen die Abmessungen der Unterstützungselemente. Die Unterstützungselemente können gleicher oder unterschiedlicher Größe, insbesondere unterschiedlicher Höhe, sein. Wenn die Unterstützungselemente ausreichend stabil sind, können Gepäckstücke, die sich aus Stabilitätsgründen nicht aufrichten lassen (beispielsweise flexible Reisetaschen) oder größere Gepäckstücke auf einem oder mehreren Unterstützungselementen aufliegen und somit oberhalb der Hauptauflagefläche des Gepäckkarussells positioniert werden, während ein aufgerichtetes, ausreichend schmales Gepäckstücke in eine Leerstelle zwischen zwei Unterstützungselementen geladen wird. So sind die Leerstellen vordefiniert und dennoch flexibel nutzbar.

Gemäß einer Ausführungsform kann erfolgen ein Detektieren von mindestens einer weiteren Eigenschaften des Gepäckstücks, beispielsweise Steifheit und/oder Konturen und/oder Position von Griffen und/oder Rollen, und Mitbestimmen der Lageveränderung anhand der detektierten mindestens einen weiteren Eigenschaft. So kann die Lageveränderung durchgeführt werden nicht nur mit dem Ziel der geringsten Auflagefläche, sondern es kann auch berücksichtigt werden, dass das Gepäckstück auf dem Gepäckkarussell so positioniert wird, dass eine Entnahme besonders einfach ist, beispielsweise indem Griffe hin zum Passagier und Koffer auf ihren Rollen stehen. Die Position von Griffen und Rollen kann erkannt werden mit Hilfe einer Vielzahl an Technologien. Auch anhand der Form (Umrisse, Konturen) kann die Position von Rollen und/oder Griffen festgestellt werden. Um eine noch zuverlässigere und immer bessere Erkennung zu ermöglichen, kann das Gepäckfördersystem in der Lage sein, iterativ zu lernen, ob die detektierte weitere Eigenschaft korrekt und mit ausreichender Genauigkeit bestimmt worden ist, so dass Fehlbestimmungen immer weiter verringert werden.

Gemäß einer Ausführungsform kann das Aufrichten nur erfolgen, wenn das Stückgut in der aufgerichteten Lage hinreichend stabil ist. So ist beispielsweise eine sehr weiche Reisetasche ohne stabile Komponenten nicht in der Lage, selber in der aufgerichteten Lage zu stehen - auch bei einer Abstützung durch ein oder zwei Unterstützungselemente. Anhand der detektierten Eigenschaft(en) des Gepäckstücks kann automatisiert bestimmt werden, ob die Stabilität in der aufgerichteten Lage hinreichend für das Verfahren ist. Diese Beurteilung kann auch individuell manuell erfolgen, auch wenn eine automatisierte Beurteilung vorzuziehen ist.

Gemäß einer Ausführungsform kann das Aufrichten des Gepäckstücks durchgeführt werden durch gemeinsames Rotieren von der ersten und einer zweiten Förderstrecke samt Gepäckstück, wobei das Gepäckstück zunächst in Transportlage auf der ersten Förderstrecke aufliegt und die zweite Förderstrecke als seitliche Wand der ersten Förderstrecke angeordnet ist. Zudem kann eine dritte Förderstrecke, die vor dem gemeinsamen Rotieren der Förderstrecken zunächst die Decke ist, die in Richtung des Gepäckstücks bewegt werden kann und dieses so während des Rotierens fixiert. Es ist sinnvoll, wenn das Gepäckstück vor dem Aufrichten bereits um eine vertikale Achse gedreht worden ist, so dass das Gepäckstück mit seinen Kanten entlang den Förderstrecken ausgerichtet ist.

So kann nach einer Ausführungsform die Lageveränderung das Drehen des Gepäckstücks um eine vertikale Achse umfassen, indem das Gepäckstück auf zwei Fördereinheiten der ersten Förderstrecke, beispielsweise Förderbändern, aufliegt und diese unabhängig voneinander angesteuert werden.

Die Erfindung zeichnet sich aus durch eine Gepäckfördersystem, umfassend Mittel zum Durchführen des erfindungsgemäßen Verfahrens. Das erfindungsgemäße Gepäckfördersystem umfasst eine erste Förderstrecke, ein Gepäckkarussell, eine Lageveränderungsvorrichtung und eine Einbringvorrichtung. Die erste Förderstrecke ist zum Transportieren eines in einer Transportlage auf dieser ersten Förderstrecke aufliegenden Gepäckstücks ausgestaltet ist, wobei die Transportlage eine flache, stabile Lage des Gepäckstücks ist. Die Lageveränderungsvorrichtung ist ausgestaltet zum Aufrichten des Gepäckstücks aus der Transportlage in eine aufgerichtete Lage, wobei das Gepäckstück in der aufgerichteten Lage weniger Auflagefläche als in der Transportlage einnimmt. Und die Einbringvorrichtung ist ausgestaltet zum Einbringen des Gepäckstücks selektiv auf eine für das Gepäckstück in der aufgerichteten Lage passende Leerstelle des Gepäckskarussells.

Ob nun die Transportlage als flache, stabile Lage tatsächlich die stabilste Lage des Gepäckstücks ist, ist für das Durchführen des erfindungsgemäßen Verfahrens irrelevant. Relevant ist, dass eine Optimierung der ursprünglichen Lage, hier als Transportlage bezeichnet, hin zu einer Lage durchgeführt, bei welcher die Raumausnutzung des Gepäckkarussells optimiert ist.

Das Fördersystem weist, soweit übertragbar, die gleichen Vorteile auf, welche bezüglich des vorgestellten Verfahrens aufgeführt sind.

Gemäß einer Ausführungsform kann die Lageveränderungsvorrichtung ausgestaltet sein zum Drehen des Gepäckstücks um eine horizontale und/oder eine vertikale Achse, so dass vor dem Einbringen auf die Leerstelle eine kürzeste Seite der Auflagefläche des Gepäckstücks entlang der Leerstelle des Gepäcckarussells ausgerichtet ist. Die Lageveränderungsvorrichtung kann mehrere separate Vorrichtungen/Einheiten umfassen. Das Drehen des Gepäckstücks um eine vertikale Achse kann von der Lageveränderungsvorrichtung durchgeführt werden, indem das Gepäckstück auf zwei Fördereinheiten der ersten Förderstrecke, beispielsweise Förderbändern, aufliegt und diese unabhängig voneinander angesteuert werden - die erste Förderstrecke wird so von der Lageveränderungsvorrichtung umfasst.

Gemäß einer Ausführungsform kann das Gepäckfördersystem zudem umfassen eine Detektionseinheit zum Detektieren von Abmessungen und/oder Form und/oder Lage des Gepäckstücks in der Transportlage und/oder der aufgerichteten Lage, wobei die Lageveränderungsvorrichtung ausgestaltet ist, eine Lageveränderung des Gepäckstücks durchzuführen basierend auf den detektierten Abmessungen und/oder der detektierten Form und/oder Lage und/oder die Detektionseinheit ausgestaltet ist zum Detektieren von mindestens einer weiteren Eigenschaften des Gepäckstücks, beispielsweise Steifheit und/oder Konturen und/oder Position von Griffen und/oder Rollen, wobei die Lageveränderungsvorrichtung ausgestaltet ist, anhand der detektierend mindestens einen weiteren Eigenschaft die Lageveränderung mitzubestimmen.

Gemäß einer Ausführungsform kann die Einbringvorrichtung ausgestaltet sein, die Leerstelle für das Gepäckstück auszuwählen basierend auf der Auflagefläche des Gepäckstücks in der aufgerichteten Lage und/oder die Lageveränderungsvorrichtung kann ausgestaltet sein, die Lageveränderung nur durchzuführen, wenn das Stückgut in der aufgerichteten Lage hinreichend stabil ist.

Gemäß einer Ausführungsform kann das Gepäckkarussell frei wählbare oder vordefinierte Leerstellen mit gleichen und/oder unterschiedlichen Abmessungen aufweisen, wobei die vordefinierten Leerstellen entlang einer Transportrichtung des Gepäckkarussells hintereinander angeordnet sein können und einander nachfolgende vordefinierte Leerstellen als Abtrennung Unterstützungselemente zum Abstützen der Gepäckstücke in aufgerichteter Lage aufweisen können. Ein Gepäckstück kann auf den Unterstützungselementen/ Abtrennungen zwischen zwei unterschiedlichen Leerstellen liegen - so sind die Leerstellen dennoch weiter vordefiniert, und dennoch flexibel für Gepäckstücke mit unterschiedlich großer Auflagefläche nutzbar. Es ist möglich, die Unterstützungselemente variabel zu positionieren um eine freie Wählbarkeit der Leerstellen zu ermöglichen.

Gemäß einer Ausführungsform kann die Lageveränderungsvorrichtung die erste und eine zweite Förderstrecke umfassen, derart angeordnet, dass das Gepäckstück zunächst in Transportlage auf der ersten Förderstrecke aufliegt und die zweite Förderstrecke als seitliche Wand der ersten Förderstrecke angeordnet sein und wobei die Lageveränderungsvorrichtung ausgestaltet sein kann zum gemeinsamen Rotieren von der ersten und einer zweiten Förderstrecke samt Gepäckstück derart, dass nach dem Rotieren das Gepäckstück in aufgerichteter Lage auf der zweiten Förderstrecke aufliegt. Zudem kann eine dritte Förderstrecke, die gegenüber der ersten Förderstrecke angeordnet und mit der ersten und zweiten Förderstrecke rotierbar ist, von der Lageveränderungsvorrichtung umfasst sein.

Ausführungsformen der Erfindung werden nachfolgend anhand der Figuren beispielsweise näher erläutert. Dabei zeigen:
- Figur 1: ein erfindungsgemäßes Gepäckfördersystem;
- Figur 2: eine Lageveränderungsvorrichtung;
- Figuren 3a-c: Gepäckförderkarusselle mit Stützelemente.

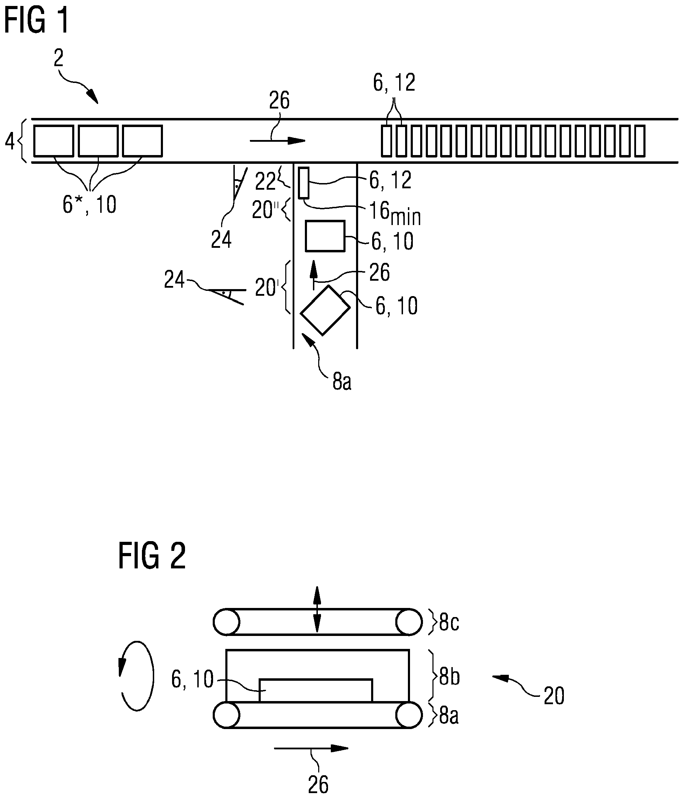

Figur 1 zeigt ein Gepäckfördersystem 2 gemäß einer Ausführungsform der Erfindung. Gepäckstücke 6 werden auf einer ersten Förderstrecke 8a hin zum Gepäckkarussell 4 transportiert und ein Detektor 24 detektiert die dreidimensionale Lage des zunächst in flacher, stabiler Transportlage 10 auf der Förderstrecke 8 aufliegenden Gepäckstücks 6. Anhand der detektierten Lage wird die Lage des Gepäckstücks 6 mit einer Lageveränderungsvorrichtung 20 verändert. In Figur 1 werden die Gepäckstücke 6 zunächst um eine vertikale Achse gedreht und anschließend um ein horizontale Achse gedreht und so in eine aufgerichtete Lage 12 aufgestellt, dass ihre Auflagefläche minimiert ist. Danach werden die Gepäckstücke 6 auf das Gepäckkarussell 4 eingebracht und rotieren mit diesem bis zur Entnahme durch den Passagier.

Zur Verdeutlichung der Platzersparnis der Erfindung sind auf der linken Seite des Gepäckkarussells 4 drei in Transportlage 10 aufliegende Gepäckstücke 6* gezeigt. Rechts sind Gepäckstücke 6 in aufgerichteter Lage 12 zu sehen. Zur Verdeutlichung sind alle Gepäckstücke 6, 6* gleich groß, auch wenn dies nicht der Flughafen-Realität entspricht. Durch das erfindungsgemäße Verfahren erhöht sich bei der gezeigten Gepäckstückgröße bei gleicher Karussellgröße die Kapazität um den Faktor drei.

Figur 2 zeigt eine Lageveränderungsvorrichtung 20 gemäß einer Ausführungsform der Erfindung. Die Lageveränderungsvorrichtung 20 umfasst eine erste Förderstrecke 8a und eine zweite Förderstrecke 8b, die als seitliche Wand zur ersten Förderstrecke 8a angeordnet sind. Die in Figur 2 gezeigte Ausführungsform weist zudem eine optionale dritte Förderstrecke 8c auf, die - ebenfalls optional - bis an das auf der ersten Förderstrecke 8a in Transportlage 10 aufliegende Gepäckstück 6 hinab bewegt werden kann. Dies kann auch erst während des nachfolgenden Schritts erfolgen. Die dritte Förderstrecke 8c wird auf das Gepäckstück gedrückt, um ein Umfallen des Gepäckstückes 6 in der Lageveränderungsvorrichtung 20 zu verhindern. Die Rotation um die Fahrtrichtungsachse 26 wird vollendet. Das Gepäckstück wird aufrecht auf das Gepäckkarussell 4 gesetzt.

Die drei Förderstrecken 8a, 8b, 8c sind in einer liegenden u-Konfiguration angeordnet. Zunächst wird das Gepäckstück 6 in Transportlage entlang der gemeinsamen Transportrichtung 26 der Förderstrecken 8a, 8b, 8c befördert und die Förderstrecken 8a, 8b, 8c werden gemeinsam derart rotiert, dass das Gepäckstück 6 anschließend in aufgerichteter Lage 12 auf der zweiten Förderstrecke 8b aufliegt. Das Gepäckstück 6 kippt von einem Förderer 8a auf den anderen 8b.

Bei der mit dem Rotieren der Förderstrecken 8a, 8b, 8c einhergehenden Schrägstellung der ersten Förderstrecke 8a gleitet das Gepäckstück 6 hin zur zweiten Förderstrecke 8b und richtet sich an dieser aus - allerdings nicht notwendigerweise derart, dass anschließend die kürzeste Kante der Auflagefläche in aufgerichteter Lage 12 entlang der Transportrichtung 26 des Gepäckkarussells 4 ausgerichtet ist. Um dies zu erreichen, muss das Gepäckstück 6 zudem separat um eine vertikale Achse gedreht und so optimal ausgerichtet werden - vor oder nach dem Aufrichten. Dies ist beispielsweise mit einer zweigeteilten Förderstrecke 8 mit separat ansteuerbaren Förderbändern, auf denen das Gepäckstück 6 zugleich aufliegt, erreichbar. Für das Einbringen auf das Gepäckkarussell 4 agiert die Förderstrecke 8b als Einbringvorrichtung 22.

Ein ähnliches Kippen der Gepäckstücke 6 kann erreicht werden, indem zwei Förderer 8a, 8b in eine v-Form hochklappen und danach um 45 Grad rotieren. Das Gepäckstück 6 kippt auf eine Seite 8a/8b.

Ein weiterer Detektor 24 beobachtet das Gepäckkarussell 4. So kann sichergestellt werden, dass ein Gepäckstück 6 nur bei einer vorhandenen Leerstelle 14, 14' ausreichender Größe auf das Gepäckkarussell 4 eingebracht wird.

Die Lageveränderungsvorrichtung 20 kann auch komplett anders ausgestaltet sein, beispielsweise als Greifroboter 20, 22, der auch zugleich als Einbringvorrichtung 22 agiert und das Gepäckstück 6 greift, aufrichtet und das optimal ausgerichtete Gepäckstück 6, 12 direkt auf das Gepäckkarussell 4 ablegt.

Natürlich ist es erfindungsgemäß auch möglich, eine Lageveränderungsvorrichtung 20 und die Einbringvorrichtung 22 auf andere als die beschriebenen Arten zu realisieren, dem Fachmann stehen viele fachübliche Technologien zur Verfügung. Die Detektoren 24 erzeugen Daten der Gepäckstücke 6, die Lageerkennung und Erkennung von Form und/oder Umrissen kann mithilfe von strategisch positionierten Lichtgittern 24, aber auch mit Bildanalyseverfahren oder anderen Verfahren durchgeführt werden.

Für ein optimales Befüllen, Aufrichten und Ausrichten ist es vorteilhaft, die Lage des Gepäckstücks 6 und seine Abmessungen vor dem Manipulieren zu kennen. Auch ist es sinnvoll, für die Bestimmung der Endposition des Gepäckstücks 6 auf dem Gepäckkarussell 4 noch weitere Eigenschaften des Gepäckstücks 6, beispielsweise Form, Steifheit, Konturen, Lage der Griffe und Rollen etc. heranzuziehen. Diese werden mit Detektoren 24 bestimmt. Für den Passagier ist es für die Entnahme ergonomisch vorteilhaft, wenn die Rollen nicht nach oben weisen und Griffe oder Ausziehhalter in seine Richtung oder zumindest nach oben. Dies soll wenn möglich berücksichtigt werden.

Das Gepäckfördersystem 2 umfasst ein Hintergrundsystem, welches in der Lage ist, in Abhängigkeit von den von Detektoren 24 erfassten Eigenschaften die Lageveränderung des Gepäckstücks 6 zu planen und durchzuführen. Eine weiche Reisetasche 6 weist keine ausreichende Stabilität auf, um in eine aufgerichtete Lage 12 aufgerichtet zu werden - in diesem Fall ist eine Ausrichtung der kürzesten Seite in Transportlage 10 entlang der Transportrichtung 26 des Gepäckkarussells 4 vorzuziehen.

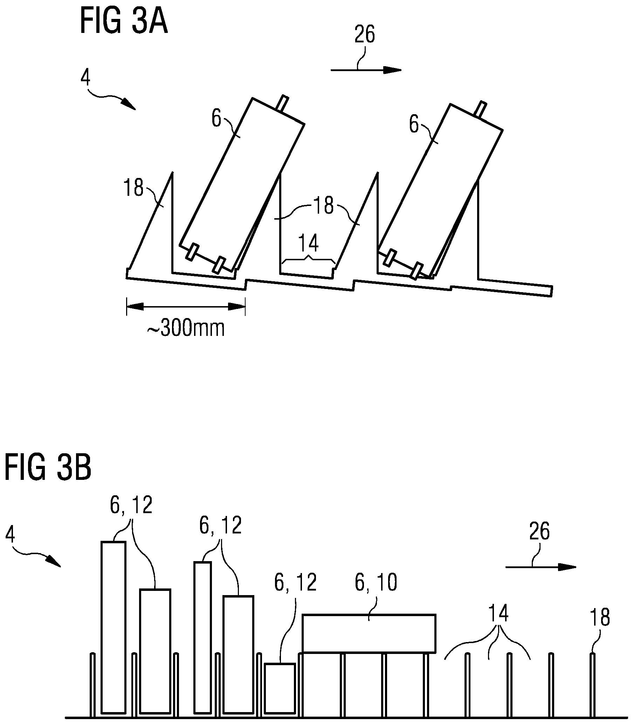

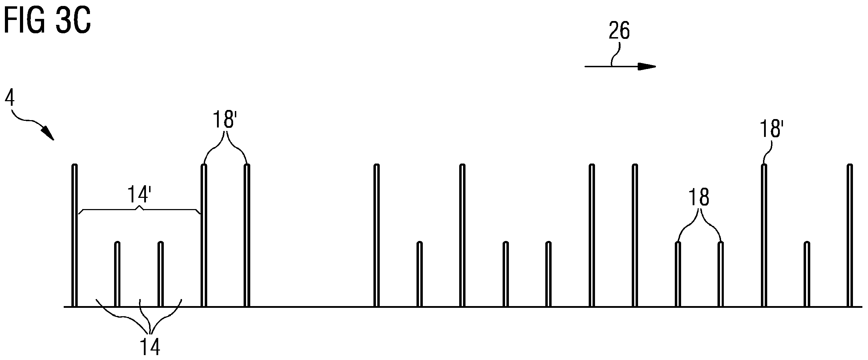

Figuren 3a, 3b, 3c zeigen seitliche Ansichten erfindungsgemä-βer Gepäckkarusselle 4, die Stützelemente 18 zur Abtrennung zwischen den Gepäckkarussell-Leerstellen 14 aufweisen.

Die Stützelemente 18 in Figur 3a sind keilförmig, aber auch andere Formen sind möglich oder einfache brettartige Abtrennungen 18 wie in Figur 3b und 3c. Die Gepäckstücke 6 können in aufgerichteter Lage 12 in zwischen den Stützelementen 18 angeordnete Leerstellen 14 eingebracht werden. Bei nicht zu scharfkantiger und stabiler Ausgestaltung der Stützelemente 14, beispielsweise durch Wahl eines weichen PU-Materials, kann ein Gepäckstück 6, welches nicht in eine aufgerichtete Lage 12 gebracht werden kann/soll, auch in Transportlage 10 auf mehreren Stützelementen 18 abgelegt werden. Dann erstreckt sich eine Leerstelle 14' über mehrere Stützelemente 18` und das Gepäckstück 6, 10 wird dennoch noch von den grö-βeren Stützelementen 18'. Auch Gepäckwannen können auf mehreren Stützelementen 18 aufliegen.

Die Stützelemente 18, 18' der Figur 3c weisen unterschiedliche Höhen auf, die Wahl der Leerstellen 14', 14 ist variabel. Die höheren Stützelemente 18' stützen auch auf kürzeren Stützelementen 18 aufliegende Gepäckstücke 6 in Transportlage 10 und definieren so größere Leerstellen 14', die je nach Bedarf auch als mehrere kleinere Leerstellen 14 herangezogen werden können. Die Häufigkeit der regelmäßige vorkommenden größeren Stützelemente 18', aber auch das Weglassen kleinerer Stützelemente 18 wird an das typische Gepäckspektrum des jeweiligen Flughafens angepasst.

Vorteilhafterweise werden die Stützelemente 18, 18' so auf den Sleds des Gepäckkarussells 4 angeordnet, dass Gepäckstücke 6 auf nur einem Sled aufliegen. So wird das Risiko von einklemmenden Gepäckstücken 6 reduziert. Es ist ebenfalls eine Möglichkeit, variabel positionierbare Stützelemente 18, 18' heranzuziehen, die vor, während oder nach dem Einbringen des Gepäckstücks 6 auf die entsprechende Leerstelle 14 an das Gepäckstück 6 gedrückt werden. So wird der Platzbedarf noch weiter minimiert und das Gepäckstück 6 wird so gut von den Stützelementen 18 abgestützt, dass auch sehr weiche Gepäckstücke 6 aufgerichtet werden können.

Gemäß einer weiteren Ausführungsform wird das Gepäckkarussell 4 direkt von Förderbändern 8 als Einbringvorrichtung 22 mit Gepäck 6 beladen. Ein Sensor 24 auf dem Gepäckkarussell 4 stromaufwärts zu der Beladestelle ermittelt in einer ersten Optimierungsstufe eine für das jeweils kommende Gepäckstück 6 hinreichend große Lücke 14. Diese Lücke 14 muss nicht groß genug sein, um das größte erlaubte Gepäckstück in seiner maximalen Dimension mit Abstand zu den umgebenden Gepäckstücken 6 aufzunehmen. Bereits dies erhöht die Kapazität des Gepäcckarussells 4, auch ohne Lageoptimierung des Gepäckstücks 6.

Für eine optimalere Flächenausnutzung wird dem Einschießen auf das Gepäckkarussell 4 Form und Lage jedes Gepäckstückes stromaufwärts zur Einbringvorrichtung 22 ermittelt. Dies kann über Lichtgitter geschehen.

In einer zweiten Optimierungsstufe wird nach der Lageerkennung das Gepäckstück 6 in der vertikalen Achse so gedreht, dass nur eine Länge, die der kurzen Seitenlängen entspricht, auf dem Gepäckkarussell 4 benötigt wird. Ein zusätzliches Gepäckdrehgerät 20 wird benötigt. Dies kann durch Förderer 8 mit zwei parallelen und einzeln steuerbaren Bändern geschehen. Geräte zum Drehen von Fördergut 6 sind bekannt.

In einer dritten Optimierungsstufe wird das dreidimensionale Gepäckstück 8 aus der Transportlage 10, in der das Gepäckstück 6 meist flach auf der Fördertechnik aufliegt mit der kürzesten Kante nach oben zeigend. Durch die Rotation der zweiten Optimierungsstufe um die vertikale Achse kann die kürzeste Kante (ebenfalls vertikal) nicht in Transportrichtung des Gepäckkarussells 4 gebracht werden. Durch ein zweites Rotationsgerät 20 in Transportrichtung 26 wird das Gepäckstück 6 in eine aufgerichtete Lage 12 aufgerichtet. Entsprechend reduziert sich der benötigte Platz auf dem Gepäckkarussell 4 auf die kürzeste Kante des Gepäckstückes 4. Koffer 6 werden somit erfindungsgemäß vorzugsweise nebeneinander stehend, und nicht in Transportlage 10 liegend, auf den Gepäckkarussell 4 befördert.

In welcher Reihenfolge die Optimierungsstufen durchgeführt werden, ist prinzipiell irrelevant.

Koffer 6 haben meist auf einer Längsseite einen Griff und auf der gegenüberliegenden Seite Füße. Sie stehen stabiler auf ihren Füßen, daher ist eine Rotation auf die Füße ist vorteilhaft. Als weitere Optimierung wird die Lage der Fuß und Griffseite mit einer künstlichen Intelligenz erkannt werden (z.B. durch eine Verarbeitung der Leseergebnisse der Lichtgittersensoren 24 aus der Lageerkennung). Die Rotationen werden so gesteuert, dass das Gepäckstück 6 am Ende auf den Füßen steht.

Gepäckstücke, die sich nicht für einen aufrechten Transport eignen, können in die künstliche Intelligenz trainiert und dann erkannt werden.

Da Gepäckstücke in aufgerichteter Lage 12 umkippen können, wird dies durch eine geeignete seitlich unterstützende Struktur verhindert werden (Figuren 3a, 3b, 3c). Dies eignet sich insbesondere für schräge Gepäckkarusselle 4.

Mit Hilfe der Erfindung wird der Platz auf einem Gepäckkarussell 4 besser genutzt. Die Abmessungen von Koffern 6 unterscheiden sich. Als Beispiel für die Platzersparnis soll ein typisches Maß von 79x50x30 cm dienen. In der ersten Optimierungsstufe werden 79 cm und ein Abstand von etwa 10cm, also 89 cm Platz auf dem Gepäckkarussell 4 benötigt.

In der zweiten Optimierungsstufe werden nur 50cm+10cm = 60cm benötigt. Werden die Koffer 6 in aufrechter Lage 12 transportiert, reichen 30cm + 10cm =40cm. Es wird weniger als die Hälfte des Platzes benötigt. Selbst bei einem kleinen Koffer von 55 x 40 x 20 cm ergibt sich eine Ersparnis von 65cm zu 30cm. Es können mehr als doppelt so viele Koffer auf der gleichen Länge gespeichert werden. Es können größere und mehr Flüge auf dem Gepäckkarussell 4 abgefertigt werden.

Im Greenfield Scenario können weniger Gepäckkarusselle 4 vorgesehen werden. Neben der besseren Platzausnutzung auf dem Gepäckkarussell 4 ergibt sich auch ein ergonomischer Vorteil für den Passagier. Die Griffe zeigen nach oben (flaches Gepäckkarussell 4) bzw. zum entnehmenden Passagier (schräges Gepäckkarussell 4). Das Gepäckstück 6 kann leichter gegriffen und entnommen werden.

Die Erfindung eignet sich nicht nur für Gepäckstücke 6 an die Passagiere ausgebende Gepäckkarusselle 4, sondern auch für Gepäckkarusselle 4 und andere Endstellen im Verladungs- und Logistikbereich.

### Bezugszeichenliste

- 2: Gepäckfördersystem
- 4: Gepäckkarussell
- 6: Gepäckstück
- 8: Förderstrecke
- 10: Transportlage
- 12: aufgerichtete Lage
- 14: Leerstelle
- 16ₘᵢₙ: kürzeste Seite eines Gepäckstücks
- 18: Unterstützungselement
- 20: Lageveränderungsvorrichtung
- 22: Einbringvorrichtung
- 24: Detektor/Detektionseinheit
- 26: Transportrichtung

## Patentansprüche

1. Verfahren zum Befüllen eines Gepäckkarussells (4) eines Gepäckfördersystems (2) mit Gepäckstücken (6), umfassend den Verfahrensschritt:
a) Transportieren eines in einer Transportlage (10) auf einer ersten Förderstrecke (8a) des Gepäckfördersystems (2) aufliegenden Gepäckstücks (6), wobei die Transportlage (10) eine flache, stabile Lage des Gepäckstücks (6) ist; das Verfahren **dadurch gekennzeichnet, dass** es ferner die folgenden Verfahrensschritte umfasst:
b) Lageveränderung des Gepäckstücks (6) umfassend ein Aufrichten des Gepäckstücks (6) aus der Transportlage (10) in eine aufgerichtete Lage (12), wobei das Gepäckstück (6) in der aufgerichteten Lage (12) auf dem Gepäckfördersystem (2) weniger Auflagefläche als in der Transportlage (10) einnimmt;
c) Einbringen des Gepäckstücks (6) auf eine Leerstelle (14) des Gepäckkarussells (4);
d) Bewegen des Gepäckstücks (6) in aufgerichteter Lage (12) auf der ehemaligen, nun befüllten Leerstelle (14) mit dem Gepäckkarussell (4).

2. Verfahren nach Anspruch 1, zudem umfassend den Verfahrensschritt
Lageveränderung des Gepäckstücks (6) umfassend Drehen des Gepäckstücks (6) um eine vertikale Achse, so dass vor dem Einbringen des Gepäckstücks (6) auf die Leerstelle (14) eine kürzeste Seite (16ₘᵢₙ) der Auflagefläche des Gepäckstücks (6) entlang der Leerstelle (14) des Gepäckkarussells (4) ausgerichtet ist.

3. Verfahren nach einem der Ansprüche 1 bis 2, zudem umfassend den Verfahrensschritt
Detektieren von Abmessungen und/oder Form und/oder Lage des Gepäckstücks (6) in der Transportlage (10) und/oder der aufgerichteten Lage (12), wobei die Lageveränderung des Gepäckstücks (6) basierend auf den detektierten Abmessungen und/oder der detektierten Form und/oder Lage durchgeführt wird.

4. Verfahren nach einem der Ansprüche 1 bis 3, **dadurch gekennzeichnet, dass**
die Leerstelle (14) für das Gepäckstück (6) ausgewählt wird basierend auf der Auflagefläche des Gepäckstücks (6) in der aufgerichteten Lage (12).

5. Verfahren nach einem der Ansprüche 1 bis 4, **dadurch gekennzeichnet, dass**
das Gepäckkarussell (4) frei wählbare oder vordefinierte Leerstellen (14) mit gleichen und/oder unterschiedlichen Abmessungen aufweist, wobei die vordefinierten Leerstellen (14) entlang einer Transportrichtung des Gepäckkarussells (4) hintereinander angeordnet sind und einander nachfolgende vordefinierte Leerstellen (14) als Abtrennung Unterstützungselemente zum Abstützen der Gepäckstücke (6) in aufgerichteter Lage aufweisen.

6. Verfahren nach einem der Ansprüche 1 bis 5, zudem umfassend den Verfahrensschritt
Detektieren von mindestens einer weiteren Eigenschaften des Gepäckstücks (6), beispielsweise Steifheit und/oder Konturen und/oder Position von Griffen und/oder Rollen, und Mitbestimmen der Lageveränderung anhand der detektierten mindestens einen weiteren Eigenschaft.

7. Verfahren nach einem der Ansprüche 1 bis 6, **dadurch gekennzeichnet, dass**
die Lageveränderung nur erfolgt, wenn das Stückgut in der aufgerichteten Lage (12) hinreichend stabil ist.

8. Verfahren nach einem der Ansprüche 1 bis 7, **dadurch gekennzeichnet, dass**
das Aufrichten des Gepäckstücks (6) durchgeführt wird durch gemeinsames Rotieren von der ersten und einer zweiten Förderstrecke (8b) samt Gepäckstück (6), wobei das Gepäckstück (6) zunächst in Transportlage (10) auf der ersten Förderstrecke (8a) aufliegt und die zweite Förderstrecke (8b) als seitliche Wand der ersten Förderstrecke (8a) angeordnet ist.

9. Verfahren nach einem der Ansprüche 2 bis 8, **dadurch gekennzeichnet, dass**
die Lageveränderung umfasst das Drehen des Gepäckstücks (6) um eine vertikale Achse, indem das Gepäckstück (6) auf zwei Fördereinheiten der ersten Förderstrecke (8a), beispielsweise Förderbändern, aufliegt und diese unabhängig voneinander angesteuert werden.

10. Gepäckfördersystem (2) umfassend eine erste Förderstrecke (8a), ein Gepäckkarussell (4), eine Lageveränderungsvorrichtung (20) und eine Einbringvorrichtung (22), wobei
a) die erste Förderstrecke (8a) zum Transportieren eines in einer Transportlage (10) auf dieser ersten Förderstrecke (8a) aufliegenden Gepäckstücks (6) ausgestaltet ist, wobei die Transportlage (10) eine flache, stabile Lage des Gepäckstücks (6) ist; **dadurch gekennzeichnet, dass**
b) die Lageveränderungsvorrichtung (20) ausgestaltet ist zum Aufrichten des Gepäckstücks (6) aus der Transportlage (10) in eine aufgerichtete Lage (12), wobei das Gepäckstück (6) in der aufgerichteten Lage (12) weniger Auflagefläche als in der Transportlage (10) einnimmt; und weiter **dadurch gekennzeichnet, dass**
c) die Einbringvorrichtung (22) ausgestaltet ist zum Einbringen des Gepäckstücks (6) selektiv auf eine für das Gepäckstück (6) in der aufgerichteten Lage (12) passende Leerstelle (14) des Gepäckskarussells (4).

11. Gepäckfördersystem (2) nach Anspruch 10, **dadurch gekennzeichnet, dass**
die Lageveränderungsvorrichtung (20) ausgestaltet ist zum Drehen des Gepäckstücks (6) um eine horizontale und/oder eine vertikale Achse, so dass vor dem Einbringen auf die Leerstelle (14) eine kürzeste Seite (16ₘᵢₙ) der Auflagefläche des Gepäckstücks (6) entlang der Leerstelle (14) des Gepäckkarussells (4) ausgerichtet ist

12. Gepäckfördersystem (2) nach einem der Ansprüche 10 bis 11, zudem umfassend
eine Detektionseinheit (24) zum Detektieren von Abmessungen und/oder Form und/oder Lage des Gepäckstücks (6) in der Transportlage (10) und/oder der aufgerichteten Lage (12), wobei die Lageveränderungsvorrichtung (20) ausgestaltet ist, eine Lageveränderung des Gepäckstücks (6) durchzuführen basierend auf den detektierten Abmessungen und/oder der detektierten Form und/oder Lage und/oder die Detektionseinheit (24) ausgestaltet ist zum Detektieren von mindestens einer weiteren Eigenschaften des Gepäckstücks (6), beispielsweise Steifheit und/oder Konturen und/oder Position von Griffen und/oder Rollen, wobei die Lageveränderungsvorrichtung (20) ausgestaltet ist, anhand der detektierend mindestens einen weiteren Eigenschaft die Lageveränderung mitzubestimmen.

13. Gepäckfördersystem (2) nach einem der Ansprüche 10 bis 12, **dadurch gekennzeichnet, dass**
die Einbringvorrichtung (22) ausgestaltet ist, die Leerstelle (14) für das Gepäckstück (6) auszuwählen basierend auf der Auflagefläche des Gepäckstücks (6) in der aufgerichteten Lage (12) und/oder die Lageveränderungsvorrichtung (20) ausgestaltet ist, die Lageveränderung nur durchzuführen, wenn das Stückgut in der aufgerichteten Lage (12) hinreichend stabil ist.

14. Gepäckfördersystem (2) nach einem der Ansprüche 10 bis 13, **dadurch gekennzeichnet, dass**
das Gepäckkarussell (4) frei wählbare oder vordefinierte Leerstellen (14) mit gleichen und/oder unterschiedlichen Abmessungen aufweist, wobei die vordefinierten Leerstellen (14) entlang einer Transportrichtung des Gepäckkarussells (4) hintereinander angeordnet sind und einander nachfolgende vordefinierte Leerstellen (14) als Abtrennung Unterstützungselemente (18) zum Abstützen der Gepäckstücke (6) in aufgerichteter Lage (12) aufweisen.

15. Gepäckfördersystem (2) nach einem der Ansprüche 10 bis 14, **dadurch gekennzeichnet, dass**
die Lageveränderungsvorrichtung (20) die erste und eine zweite Förderstrecke (8a, 8b) umfasst, derart angeordnet, dass das Gepäckstück (6) zunächst in Transportlage (10) auf der ersten Förderstrecke (8a) aufliegt und die zweite Förderstrecke (8b) als seitliche Wand der ersten Förderstrecke (8a) angeordnet ist und wobei die Lageveränderungsvorrichtung (20) ausgestaltet ist zum gemeinsamen Rotieren von der ersten und einer zweiten Förderstrecke (8a, 8b) samt Gepäckstück (6) derart, dass nach dem Rotieren das Gepäckstück (6) in aufgerichteter Lage (12) auf der zweiten Förderstrecke (8b) aufliegt.

## Claims

1. Method for filling a baggage carousel (4) of a baggage conveying system (2) with items of baggage (6), comprising the method step:
a) Transporting an item of baggage (6) lying in a transport position (10) on a first conveying line (8a) of the baggage conveying system (2), wherein the transport position (10) is a flat, stable position of the item of baggage (6); the method being **characterised in that** it further comprises the following method steps:
b) Changing the position of the item of baggage (6) comprising standing up the item of baggage (6) from the transport position (10) into an upright position (12), wherein in the upright position (12) the item of baggage (6) takes up less contact area on the baggage conveying system (2) than in the transport position (10);
c) Placing the item of baggage (6) on an empty place (14) of the baggage carousel (4);
d) Moving the item of baggage (6) in the upright position (12) onto the previously empty place (14), which is now filled, with the baggage carousel (4).

2. Method according to claim 1, moreover comprising the method step
changing the position of the item of baggage (6) comprising rotating the item of baggage (6) about a vertical axis so that before the item of baggage (6) is placed onto the empty place (14), a shortest side (16ₘᵢₙ) of the contact area of the item of baggage (6) is aligned along the empty place (14) of the baggage carousel (4).

3. Method according to one of claims 1 to 2, moreover comprising the method step
detecting dimensions and/or shape and/or position of the item of baggage (6) in the transport position (10) and/or the upright position (12), wherein the change in position of the item of baggage (6) is carried out on the basis of the detected dimensions and/or the detected shape and/or position.

4. Method according to one of claims 1 to 3, **characterised in that**
the empty place (14) is selected for the item of baggage (6) on the basis of the contact area of the item of baggage (6) in the upright position (12).

5. Method according to one of claims 1 to 4, **characterised in that**
the baggage carousel (4) has freely selectable or predefined empty places (14) with the same and/or different dimensions, wherein the predefined empty places (14) are arranged one behind the other along a transport direction of the baggage carousel (4) and predefined empty places (14) which follow one another have supporting elements as a partition for supporting the items of baggage (6) in an upright position.

6. Method according to one of claims 1 to 5, moreover comprising the method step
detecting at least one further property of the item of baggage (6), for instance stiffness and/or contours and/or position of handles and/or rollers, and determining the change in position on the basis of the detected at least one further property.

7. Method according to one of claims 1 to 6, **characterised in that**
the change in position only takes place when the item is sufficiently stable in the upright position (12).

8. Method according to one of claims 1 to 7, **characterised in that**
the item of baggage (6) is stood up by jointly rotating the first and a second conveying line (8b) together with the item of baggage (6), wherein the item of baggage (6) first lies in the transport position (10) on the first conveying line (8a) and the second conveying line (8b) is arranged as a lateral wall of the first conveying line (8a).

9. Method according to one of claims 2 to 8, **characterised in that** the change in position comprises the rotation of the item of baggage (6) about a vertical axis, by the item of baggage (6) lying on two conveying units of the first conveying line (8a), for instance conveyor belts, and these being controlled independently of one another.

10. Baggage conveying system (2) comprising a first conveying line (8a), a baggage carousel (4), a position changing apparatus (20) and a placement apparatus (22), wherein
a) the first conveying line (8a) is designed to transport an item of baggage (6) lying in a transport position (10) on this first conveying line (8a), wherein the transport position (10) is a flat, stable position of the item of baggage (6); **characterised in that**
b) the position changing apparatus (20) is designed to stand up the item of baggage (6) from the transport position (10) into an upright position (12), wherein in the upright position (12) the item of baggage (6) takes up less contact area than in the transport position (10); and further **characterised in that**
c) the placement apparatus (22) is designed to place the item of baggage (6) selectively onto an empty place (14) of the baggage carousel (4) which is matched to the item of baggage (6) in the upright position (12).

11. Baggage conveying system (2) according to claim 10, **characterised in that**
the position changing apparatus (20) is designed to rotate the item of baggage (6) about a horizontal and/or vertical axis, so that before placement onto the empty place (14), a shortest side (16ₘᵢₙ) of the contact area of the item of baggage (6) is aligned along the empty place (14) of the baggage carousel (4) .

12. Baggage conveying system (2) according to one of claims 10 to 11, moreover comprising
a detection unit (24) for detecting dimensions and/or shape and/or position of the item of baggage (6) in the transport position (10) and/or the upright position (12), wherein the position changing apparatus (20) is designed to carry out a change in position of the item of baggage (6) on the basis of the detected dimensions and/or the detected shape and/or position and/or the detection unit (24) is designed to detect at least one further properties of the item of baggage (6), for instance stiffness and/or contours and/or position of handles and/or rollers, wherein the position changing apparatus (20) is designed to determine the change in position on the basis of the at least one further property detected.

13. Baggage conveying system (2) according to one of claims 10 to 12, **characterised in that**
the placement apparatus (22) is designed to select the empty place (14) for the item of baggage (6) on the basis of the contact area of the item of baggage (6) in the upright position (12) and/or the position changing apparatus (20) is designed to carry out the change in position only when the item is sufficiently stable in the upright position (12).

14. Baggage conveying system (2) according to one of claims 10 to 13, **characterised in that**
the baggage carousel (4) has freely selectable or predefined empty places (14) with the same and/or different dimensions, wherein the predefined empty places (14) are arranged one behind the other along a transport direction of the baggage carousel (4) and predefined empty places (14) which follow one another have supporting elements (18) as a partition for supporting the items of baggage (6) in an upright position (12) .

15. Baggage conveying system (2) according to one of claims 10 to 14, **characterised in that**
the position changing apparatus (20) comprises the first and a second conveying line (8a, 8b), arranged so that the item of baggage (6) first lies in the transport position (10) on the first conveying line (8a) and the second conveying line (8b) is arranged as a lateral wall of the first conveying line (8a) and wherein the position changing apparatus (20) is designed for joint rotation of the first and a second conveying line (8a, 8b) together with the item of baggage (6) so that after rotation, the item of baggage (6) rests in the upright position (12) on the second conveying line (8b).

## Revendications

1. Procédé de remplissage d'un carrousel à bagages (4) d'un système de transport de bagages (2) par des bagages (6), comprenant l'étape de procédé consistant à :
a) transporter un bagage (6) couché dans une position de transport (10) sur un premier convoyeur (8a) du système de transport de bagages (2), la position de transport (10) étant une position plane et stable du bagage (6) ;
le procédé **se caractérisant en ce qu'**il comprend en outre les étapes de procédé suivantes :
b) changement de position du bagage (6) comprenant un redressement du bagage (6) depuis la position de transport (10) en une position debout (12), le bagage (6) en position debout (12) sur le système de transport de bagages (2) occupant moins de surface d'entreposage qu'en position de transport (10) ;
c) disposition du bagage (6) sur une place vide (14) du carrousel à bagages (4) ;
d) déplacement du bagage (6) en position débout (12) sur l'ancienne place vide (14) désormais remplie avec le carrousel à bagages (4).

2. Procédé selon la revendication 1, comprenant en plus l'étape de procédé consistant à modifier la position du bagage (6) comprenant de faire tourner le bagage (6) autour d'un axe vertical, de sorte qu'avant la disposition du bagage (6) sur la place vide (14), un plus petit côté (16ₘᵢₙ) de la surface d'entreposage du bagage (6) soit aligné sur la place vide (14) du carrousel à bagages (4).

3. Procédé selon l'une des revendications 1 à 2, comprenant en outre l'étape de procédé consistant à
détecter les dimensions et/ou la forme et/ou la position du bagage (6) dans sa position de transport (10) et/ou en position debout (12), le changement de position du bagage (6) étant réalisé en fonction des dimensions détectées et/ou de la forme détectée et/ou de la position détectée.

4. Procédé selon l'une des revendications 1 à 3, **caractérisé en ce que** la place vide (14) pour le bagage (6) est choisie en fonction de la surface d'entreposage du bagage (6) en position debout (12).

5. Procédé selon l'une des revendications 1 à 4, **caractérisé en ce que** le carrousel à bagages (4) présente des places vides prédéfinies ou librement sélectionnables (14) de dimensions identiques et/ou différentes, les places vides prédéfinies (14) étant disposées les unes derrière les autres le long d'une direction de transport du carrousel à bagages (4) et les places vides prédéfinies (14) consécutives présentant en guise de séparations des éléments supports destinés à soutenir les bagages (6) en position debout.

6. Procédé selon l'une des revendications 1 à 5, comprenant en outre l'étape de procédé consistant à
détecter au moins une autre propriété du bagage (6), par exemple sa rigidité et/ou ses contours et/ou la position de poignées et/ou de roulettes, et influencer le changement de position sur la base de l'au moins une autre propriété détectée.

7. Procédé selon l'une des revendications 1 à 6, **caractérisé en ce que** le changement de position n'a lieu que si le bagage est suffisamment stable en position debout (12).

8. Procédé selon l'une des revendications 1 à 7, **caractérisé en ce que** le redressement du bagage (6) est effectué par la rotation commune du premier et d'un second convoyeur (8b) avec le bagage (6), le bagage (6) étant d'abord couché dans la position de transport (10) sur le premier convoyeur (8a) et le second convoyeur (8b) étant disposé comme une paroi latérale du premier convoyeur (8a).

9. Procédé selon l'une des revendications 2 à 8, **caractérisé en ce que** le changement de position comprend de faire tourner le bagage (6) autour d'un axe vertical pendant que le bagage (6) est couché sur deux unités de convoyage du premier convoyeur (8a), par exemple des bandes convoyeuses, et celles-ci sont commandées indépendamment l'une de l'autre.

10. Système de transport de bagages (2) comprenant un premier convoyeur (8a), un carrousel à bagages (4), un dispositif de changement de position (20) et un dispositif d'introduction (22), dans lequel
a) le premier convoyeur (8a) est conçu pour transporter un bagage (6) couché dans une position de transport (10) sur un premier convoyeur (8a), la position de transport (10) étant une position plane et stable du bagage (6) ;
**caractérisé en ce que**
b) le dispositif de changement de position des bagages (20) est conçu pour redresser le bagage (6) depuis la position de transport (10) en une position debout (12), le bagage (6) en position debout (12) occupant moins de surface d'entreposage qu'en position de transport (10) ;
et **caractérisé en outre en ce que**
c) le dispositif d'introduction (22) est conçu pour introduire le bagage (6) sélectivement sur une place vide (14) du carrousel à bagages (4) adéquate pour le bagage (6) en position debout (12).

11. Système de transport de bagages (2) selon la revendication 10, **caractérisé en ce que** le dispositif de changement de position (20) est conçu pour faire tourner le bagage (6) autour d'un axe horizontal et/ou d'un axe vertical, de sorte qu'avant l'introduction sur la place vide (14), un plus petit côté (16ₘᵢₙ) de la surface d'entreposage du bagage (6) soit aligné sur la place vide (14) du carrousel à bagages (4).

12. Système de transport de bagages (2) selon l'une des revendications 10 à 11, comprenant en outre une unité de détection (24) pour détecter les dimensions et/ou la forme et/ou la position du bagage (6) dans sa position de transport (10) et/ou en position debout (12), le dispositif de changement de position (20) étant conçu pour réaliser un changement de position du bagage (6) en fonction des dimensions détectées et/ou de la forme détectée et/ou de la position détectée, et/ou l'unité de détection (24) est conçue pour détecter au moins une autre propriété du bagage (6), par exemple la rigidité et/ou les contours et/ou la position de poignées et/ou de roulettes, le dispositif de changement de position (20) étant conçu pour influencer le changement de position sur la base de l'au moins une autre propriété détectée.

13. Système de transport de bagages (2) selon l'une des revendications 10 à 12, **caractérisé en ce que** le dispositif d'introduction (22) est conçu pour sélectionner la place vide (14) pour le bagage (6) en fonction de la surface d'entreposage du bagage (6) en position debout (12) et/ou **en ce que** le dispositif de changement de position (20) est conçu pour ne réaliser le changement de position que si le bagage est suffisamment stable en position debout (12).

14. Système de transport de bagages (2) selon l'une des revendications 10 à 13, **caractérisé en ce que** le carrousel (4) présente des places vides prédéfinies ou librement sélectionnables (14) de dimensions identiques et/ou différentes, les places vides prédéfinies (14) étant disposées les unes derrières les autres le long d'une direction de transport du carrousel à bagages (4) et les places vides prédéfinies (14) consécutives présentant en guise de séparations des éléments supports (18) destinés à soutenir les bagages (6) en position debout (12).

15. Système de transport de bagages (2) selon l'une des revendications 10 à 14, **caractérisé en ce que** le dispositif de changement de position (20) comprend le premier et un second convoyeur (8a, 8b) disposés de sorte que le bagage (6) est d'abord couché dans la position de transport (10) sur le premier convoyeur (8a) et le second convoyeur (8b) est disposé comme une paroi latérale du premier convoyeur (8a), et le dispositif de changement de position (20) est conçu pour faire tourner ensemble le premier et un second convoyeur (8a, 8b) avec le bagage (6) de sorte qu'après la rotation, le bagage (6) se dresse en position debout (12) sur le second convoyeur (8b).
